(19) **Europäisches Patentamt / European Patent Office / Office européen des brevets**

(11) **EP 3 274 410 B1**

(12) **EUROPEAN PATENT SPECIFICATION**

(45) Date of publication and mention of the grant of the patent:
**18.09.2019 Bulletin 2019/38**

(51) Int Cl.:
*C09D 5/00* *(2006.01)*    *C09D 175/04* *(2006.01)*
*C09D 133/08* *(2006.01)*    *D21H 19/10* *(2006.01)*

(21) Application number: **16712764.6**

(22) Date of filing: **16.03.2016**

(86) International application number:
**PCT/EP2016/055662**

(87) International publication number:
**WO 2016/150787 (29.09.2016 Gazette 2016/39)**

(54) **USE OF A COMPSITION AS A TRANSFER METALLISATION PRIMER**

VERWENDUNG VON EINER ZUSAMMENSETZUNG FÜR TRANSFERMETALLISIERUNGSPRIMER

UTILISATION D'UNE COMPOSITION COMME D'AGENT D'APPRÊT POUR MÉTALLISATION PAR TRANSFERT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2015 PCT/CN2015/075145**
**02.07.2015 PCT/CN2015/083203**

(43) Date of publication of application:
**31.01.2018 Bulletin 2018/05**

(60) Divisional application:
**18167145.4 / 3 381 986**

(73) Proprietor: **BASF SE**
**67056 Ludwigshafen am Rhein (DE)**

(72) Inventors:
• **YAN, Patrick**
  **Shanghai 201100 (CN)**
• **XIA, Jian Feng**
  **Shanghai 200433 (CN)**

(74) Representative: **BASF IP Association**
**BASF SE**
**G-FLP-C006**
**67056 Ludwigshafen (DE)**

(56) References cited:
**WO-A2-2012/170623**    **JP-A- H10 204 403**
**JP-A- 2005 343 989**

## Description

### Field of the Invention

The invention relates to use of transfer metallization primers for paper packaging materials of cigarette, liquor, food, and cosmetic.

### Description of Related Arts

Transfer metallization primers are well known in the art of paper packaging for cigarette, liquor, food, and cosmetic etc. Currently, transfer metallization primers are mainly organic solvent based systems. Generally, there is much organic solvent in the organic solvent based transfer metallization primer, which causes two significant defects: 1) much solvent can evaporate during the printing process, which results in strong odor and thus has negative influence on the environment; 2) the evaporated organic solvent is highly flammable and the safety in the site is a problem, thus many safety investments are needed to ensure the safety in the site. Therefore, there is a need to develop an aqueous transfer metallization primer in order to reduce the amount of volatile organic compound.

US2011/0317269A1 disclosed a releasable metalized embossed transfer film comprising (a) a polymeric base layer, (b) an embossing material layer in direct contact with the polymeric base layer, and (c) a metal layer in direct contact with the embossing material layer opposite the polymeric base layer. Particularly, the releasable embossing metalized transfer film can be prepared by coating a polyurethane embossing material onto a polyester film, and then depositing a metal layer on the embossed surface.

CN103821032A disclosed a method for producing an aluminized paper packaging material comprising the steps of 1) coating polyester film with a peeling material, 2) applying aluminum onto the peeling material in vacuum to form a vacuum-aluminized transfer film, 3) coating an adhesive onto the transfer film and then applying paper thereon to form a composite semi-finished product, 4) peeling off the polyester film from the composite semi-finished product to obtain the final aluminized paper packaging materials.

JP 2005-343989 discloses water borne coating compositions comprising alkali neutralized copolymers forming micelles having 10 to 300 nm average diameter, and pigments in an aqueous medium. The compositions can be used as surface finish material or base coat for automobiles, buildings or engineering structures.

However, there is still a need to find an aqueous transfer metallization primer which can form a releasable metalized transfer film with high shining, good heat resistance, release property, and high transparency, while has excellent environment-friendly effect.

### Summary of the Invention

For the purpose of the present invention, the use of a composition as a transfer metallization primer as defined in claims 1 to 3 is provided, which comprises a colloidal acrylic emulsion, wherein the colloidal acrylic emulsion has acid value of 60 to 250 mg KOH/g, weight average molecular weight (Mw) of 5,500 to 100,000 daltons, and Tg of 20 to 140°C.

In addition, the present invention relates to use of the transfer metallization primers for paper packaging materials of cigarette, liquor, food, and cosmetic.

### Embodiments of the Invention

Any additive usually used in the art can be contained in the transfer metallization primer. For example, the transfer metallization primer can comprise an additive selected from surfactant, coalescent agent, defoamer, wetting agent, wax, and combination thereof.

The present invention provides a transfer metallization primer comprising a colloidal acrylic emulsion, wherein the colloidal acrylic emulsion has acid value of 60 to 250 mg KOH/g, weight average molecular weight of 5,500 to 100,000 daltons, and Tg of 20°C to 140°C.

In one preferred embodiment of the invention, the acid value is from 150 to 210 mg KOH/g, the weight average molecular weight is from 6,000 to 60,000 daltons, and Tg is from 60 to 130 °C.

This colloidal acrylic emulsion can be obtained by emulsion polymerization in the presence of surfactant. Particularly, water and surfactant are added into for example a four neck glass reactor and heated to 80-90°C. Then pre-emulsion of acrylate monomers emulsified with water and surfactant are added into the reactor to form a colloidal acrylic emulsion. The acrylate monomer can be alkyl/cycloaliphatic acrylate or alkyl/cycloaliphatic methacrylate, such as methyl (meth)acrylate, ethyl (meth)acrylate, propyl (meth)acrylate, isopropyl (meth)acrylate, butyl (meth)acrylate, isobutyl (meth)acrylate, isobornyl (meth)acrylate, cyclohexyl (meth)acrylate and combination thereof.

The surfactant here can be alkyl sulfate, alkyl-acryl sulfonate, alkyl ethersulfates, alkylphenol ethersulfates, sulfosuccinate, sulfosuccinamate, phosphoric acid esters, fatty alcohol ethoxylate, modified fatty alcohol ethoxylate, alkylphenol ethoxylate, alkyl polyglycolether, alkyl polyglycosides, EO/PO block copolymers etc. The surfactant can be used singly or in a combination of two or more surfactants. Typical surfactant can be but not limited to Disponil® FES27, Disponil® FES 77, Disponil® SUS 875 Special, Disponil® AES 60, Disponil® AES 25, Disponil® FEP 6300, Disponil® SDS30, Disponil® SLS 103, Disponil® LDBS, Disponil® AFEX 3070, Disponil® TA 400, Lutensol® AT 11 to AT 25, Lutensol® TO8 to TO 15, Emulan® TO 2080 to TO 4070 etc. available from BASF. In one embodiment of the present invention, single surfactant or surfactant package can be used.

Generally, Mw of polymers in the emulsion polymerization can be controlled by the amount of chain transfer agent. The higher the amount of the chain transfer agent is, the lower Mw of the resulted polymer will be. General speaking, it is preferred to have a high Mw in order to get good release property. It is preferred to use chain transfer agent of less than 7%, more preferably less than 3%, in particular less than 1.5%, most preferably less than 0.5% based on the total weight of the monomers in order to achieve good release property. Typical chain transfer agent can be: 1) thiols, such as: dodecyl mercaptane, t-dodecyl mercaptane, 3-mercaptopropionic acid, 2-ethylhexyl thioglycolate, terpinolene, butyl 3-mercaptopropanoate and similar chemical homologues; 2) halocarbons, such as: carbon tetrachloride and similar chemical homologues; and 3) alcohols, such as iso-propanol, iso-butanol and similar chemical homologues.

The present invention relates to use of the transfer metallization primer as defined in claims 1 to 3 for paper packaging materials of cigarette, liquor, food, and cosmetic.

According to the present invention, the transfer metallization process comprises the following steps of:

1) applying the transfer metallization primer onto the surface of PET film;
2) metalizing A1 on top of the transfer metallization primer;
3) applying water-based adhesive on top of metalized Al layer;
4) laminating adhesive with a paper substrate; and
5) peeling off PET film from another side on the press.

The final product of transfer metallization paper is a surface metalized paper with shining and mirror aspect, and this transfer metallization paper can be further used to package cigarette, alcohol, food, cosmetic, etc.

For peeling release property, the less the residual area of PET film is, the better the result is. In the context of the invention, it is considered being good when less than 5% of PET film resides.

Heat resistance is an important property of transfer metallization primer as there is a heat sealing process at a temperature of about 120°C for about 6-8 seconds in the following packaging process. Heat resistance is measured by putting two pieces of coated film together by face to face, then using heater to press the films at a temperature of about 120°C.

Glass transition temperature (Tg) is calculated according to Fox Equation:

$$1/Tg_{(Polymer)} = Wt\%_1/Tg_1 + Wt\%_2/Tg_2 + \cdots + Wt\%_n/Tg_n$$

(Remark: $Wt\%_n$ is the weight content of each monomer based on total monomer, $Tg_n$ is the Tg of homopolymer of corresponding monomer, all temperatures used in the Fox Equation are expressed in degree K.

The glass transition temperature of homopolymers may be found, for example, in "Polymer Handbook", edited by J. Brandrup and E. H. Immergut, Interscience Publishers.)

The particle size is measured by dynamic light scattering (DLS) particle size analyser like Malvern Nano ZS90.

The molecular weight (Mw) is measured by Gel Permeation Chromatography (GPC) with poly(acrylic acid)-Na salt as standards.

All percentages are mentioned by weight unless otherwise indicated.

## Examples

The present invention is now further illustrated by reference to the following examples, however, the examples are used for the purpose of explanation and not intended to limit the scopes of the invention.

## Example 1

Preparation of colloidal acrylic emulsion: In a 1000ml four bottle-neck glass reactor with reflux, thermal couple and agitator equipped, 300g of water was charged with 0.25g of Disponil® FES 77 and 0.25g of Disponil® FES 27 from BASF, then stirred till homogenous and heated to 80-85°C.

Meanwhile, 100g of water was charged into an open glass vessel with stirring followed by adding 1.75g Disponil® FES 77 and 1.75g Disponil® FES 27 and stirring till homogenous. Then 113g of methyl methacrylate, 97g of methacrylic acid, 60g of ethyl acrylate, 6g of t-dodecyl mercaptane and 30g of 2-ethylhexyl acrylate were charged into the open glass vessel gradually with stirring at 200rpm and continuously stirring at 600rpm for another 30 minutes to form the pre-emulsion.

When the temperature of the four bottle-neck glass reactor reached 80°C, 15g of 20% ammonium persulfate solution was added into the reactor by one shot. Then the pre-emulsion above was continuously added into the reactor during a period of 240 minutes, while temperature was controlled at 80-90°C. After the pre-emulsion feed was added completely, the reaction was maintained at 80-90°C for another 100 minutes. Then 95g of 20% ammonia solution was added into the reactor to neutralize the emulsion at 70°C for 2 hours till homogeneous.

## Example 2

Preparation of colloidal acrylic emulsion: In a 1000ml four bottle-neck glass reactor with reflux, thermal couple and agitator equipped, 300g of water was charged with 0.25g of Disponil® DB-45 and 0.25g of Disponil® FES 27 from BASF, then stirred till homogenous and heated to 80-85°C.

Meanwhile, 100g of water was charged into an open glass vessel with agitator followed by adding 1.75g Disponil® DB-45 and 1.75g Disponil® FES 27 and stirring till homogenous. Then 127g of methyl methacrylate, 96g of methacrylic acid, 51g of ethyl acrylate, 4g of 2-ethyl hexyl thioglycoate and 26g of butyl acrylate were charged into the open glass vessel gradually with stirring at 200rpm and continuously stirring at 600rpm for another 30 minutes to form the pre-emulsion.

When the temperature of the four bottle-neck glass reactor reached 80°C, 15g of 20% ammonium persulfate solution was added into the reactor by one shot. Then the pre-emulsion above was continuously added into the reactor during a period of 240 minutes, while temperature was controlled at 80-90°C. After the pre-emulsion feed was added completely, the reaction was maintained at 80-90°C for another 100 minutes. Then 95g of 20% ammonia solution was added into the reactor to neutralize the emulsion at 70°C for 2 hours till homogeneous.

## Example 3

Preparation of colloidal acrylic emulsion: In a 1000ml four bottle-neck glass reactor with reflux, thermal couple and agitator equipped, 300g of water was charged with 0.25g of Disponil® LDBS-23 and 0.25g of Lutensol® TO 4070 from BASF, then stirred till homogenous and heated to 80-85°C.

Meanwhile, 100g of water was charged into an open glass vessel with agitator followed by adding 1.75g Disponil® LDBS 23 and 1.75g Lutensol® TO 4070 and stirring till homogenous. Then 204g of methyl methacrylate, 96g of methacrylic acid and 5g of methoxy butyl 3-mercaptopropionate were charged into the open glass vessel gradually with stirring at 200rpm and continuously stirring at 600rpm for another 30 minutes to form the pre-emulsion.

When the temperature of the four bottle-neck glass reactor reached 80°C, 15g of 20% ammonium persulfate solution was added into the reactor by one shot. Then the pre-emulsion above was continuously added into the reactor during a period of 240 minutes, while temperature was controlled at 80-90°C. After the pre-emulsion feed was added completely, the reaction was maintained at 80-90°C for another 100 minutes. Then 95g of 20% ammonia solution was added into the reactor to neutralize the emulsion at 70°C for 2 hours till homogeneous.

## Example 4

In a 1000ml four bottle-neck glass reactor with reflux, thermal couple and agitator equipped, 300g of water was charged with 0.25g of Disponil® FES 77 and 0.25g of Disponil® SDS 30 from BASF, then stirred till homogenous and heated to 80-85°C.

Meanwhile, 100g of water was charged into an open glass vessel with agitator followed by adding 1.75g Disponil® FES 77 and 1.75g Disponil® SDS 30 and stirring till homogenous. Then 137g of methyl methacrylate, 69g of methacrylic acid, 60g of 2-ethylhexyl acrylate and 34g of isobornyl methacrylate were mixed with 5g of butyl 3-mercaptopropionate and charged into the open glass vessel gradually with stirring at 200rpm and continuously stirring at 600rpm for another 30 minutes to form the pre-emulsion.

When the temperature of the four bottle-neck glass reactor reached 80°C, 15g of 20% ammonium persulfate solution was added into the reactor by one shot. Then the pre-emulsion above was continuously added into the reactor during a period of 240 minutes, while temperature was controlled at 80-90°C. After the pre-emulsion feed was added completely, the reaction was maintained at 80-90°C for another 120 minutes. Then 68.2g of 20% ammonia solution was added into the reactor to neutralize the emulsion at 70°C for 2 hours till homogeneous.

**Comparative example 1**

In a 1000ml four bottle-neck glass reactor with reflux, thermal couple and agitator equipped, 300g of water was charged with 0.25g of Disponil® SLS 103 and 0.25g of Lutensol® AT-18 from BASF, then stirred till homogenous and heated to 80-85°C.

Meanwhile, 100g of water was charged into an open glass vessel with agitator followed by adding 1.75g Disponil® SLS 103 and 1.75g Lutensol® AT-18 and stirring till homogenous. Then 120g of methyl methacrylate, 83g of methacrylic acid, 67g of ethyl acrylate and 30g of isobornyl methacrylate were mixed with 12g of isopropanol and charged into the open glass vessel gradually with stirring at 200rpm and continuously stirring at 600rpm for another 30 minutes to form the pre-emulsion.

When the temperature of the four bottle-neck glass reactor reached 80°C, 15g of 20% ammonium persulfate solution was added into the reactor by one shot. Then the pre-emulsion above was continuously added into the reactor during a period of 240 minutes, while temperature was controlled at 80-90°C. After the pre-emulsion feed was added completely, the reaction was maintained at 80-90°C for another 120 minutes. Then 82g of 20% ammonia solution was added into the reactor to neutralize the emulsion at 70°C for 2 hours till homogeneous.

**Comparative example 2**

In a 1000ml four bottle-neck glass reactor with reflux, thermal couple and agitator equipped, 300g of water was charged with 0.25g of Disponil® FES 77 and 0.25g of Disponil® FES 27 from BASF, then stirred till homogenous and heated to 80-85°C.

Meanwhile, 100g of water was charged into an open glass vessel with agitator followed by adding 1.75g Disponil® FES 77 and 1.75g Disponil® FES 27 and stirring till homogenous. Then 137g of methyl methacrylate, 69g of methacrylic acid, 60g of 2-ethylhexyl acrylate and 34g of isobornyl methacrylate were mixed with 24g of 3-mercaptopropionic acid and charged into the open glass vessel gradually with stirring at 200rpm and continuously stirring at 600rpm for another 30 minutes to form the pre-emulsion.

When the temperature of the four bottle-neck glass reactor reached 80°C, 15g of 20% ammonium persulfate solution was added into the reactor by one shot. Then the pre-emulsion above was continuously added into the reactor during a period of 240 minutes, while temperature was controlled at 80-90°C. After the pre-emulsion feed was added completely, the reaction was maintained at 80-90°C for another 100 minutes. Then 68.2g of 20% ammonia solution was added into the reactor to neutralize the emulsion at 70°C for 2 hours till homogeneous.

The primer based on the colloidal emulsion can be prepared at room temperature according to the following procedure: 70g of the resulted colloidal emulsion was put in a beaker, 20g of water was then charged together with 10g of 2-isopropanol under agitation for 5 minutes till get homogeneous. Surprisingly, all of these colloidal emulsions show very good surface shining property. Furthermore, a primer was obtained with good peeling property, heat resistance, printability, levelling and surface shining aspect after metallization.

All the colloidal acrylic emulsion samples: example 1, example 2, example 3, comparative example 1, example 4 and comparative example 2 were formulated with isopropanol and water mixture, the weight ratio of isopropanol and water is isopropanol/water = 1:2. The solid content of the final formulation based on each colloidal acrylic emulsion was adjusted to 20% by above isopropanol and water mixture, which is ready to print for the following evaluation according to the process.

The measured results are listed in table 1 below.

Table 1

| | Mw | Calculated Tg (°C) | Acid value (mgKOH/g) | Release property | Heat resistance | Shining properties |
|---|---|---|---|---|---|---|
| Comp. Ex. 1 | 5000 | 82.5 | 180 | ●●● | ●●●●● | ●●●●● |
| Ex.1 | 11000 | 65 | 210 | ●●●●● | ●●●● | ●●●●● |
| Comp. Ex. 2 | 1500 | 65 | 150 | ● | ●●● | ●●●●● |
| Ex.2 | 18000 | 75 | 210 | ●●●●● | ●●●●● | ●●●●● |
| Ex.3 | 11000 | 127 | 210 | ●●●●● | ●●●●● | ●●●●● |

(continued)

|  | Mw | Calculated Tg (°C) | Acid value (mgKOH/g) | Release property | Heat resistance | Shining properties |
|---|---|---|---|---|---|---|
| Ex.4 | 10000 | 65 | 150 | ●●●● | ●●●● | ●●●●● |
| Remarks: ●●●● or above indicates the results acceptable in the industry, while ●●● or below indicates the results non acceptable in the industry | | | | | | |

It is found that the release property is becoming poor when Mw of the colloidal emulsion is too low.

It is found that the release property is excellent in example 1.

It is also found the heat resistance is excellent for example 2, and example 3 and comparative example 1, heat resistance is dependent on Tg of the polymer, the higher Tg of the polymer, the better the heat resistance can be achieved. Example 2 and example 3 have both excellent heat resistance and release property due to high molecular weight and high Tg of the polymer.

It is intended that the present invention cover such modifications and variations as come within the scope of the appended claims and their equivalents.

**Claims**

1. Use of a composition as a transfer metallization primer, wherein the composition comprises a colloidal acrylic emulsion, wherein the colloidal acrylic emulsion has acid value of 60 to 250 mg KOH/g, weight average molecular weight (Mw) of 5,500 to 100,000 daltons, and glass transition temperature (Tg) of 20 to 140°C, wherein the weight average molecular weight is measured by Gel Permeation Chromatography with poly(acrylic acid)-Na salt as standards and the glass transition temperature is calculated according to the Fox equation.

2. Use according to claim 1, wherein the acid value is from 150 to 210 mg KOH/g, the weight average molecular weight is from 6,000 to 60,000 daltons, and glass transition temperature is from 60 to 130 °C.

3. Use according to claim 1 or 2, wherein the transfer m etallization primer can further comprise an additive selected from surfactant, coalescent agent, defoamer, wetting agent, wax, and combination thereof.

4. Use of the transfer metallization primers according to any one of claims 1 to 3 for paper packaging materials of cigarette, liquor, food, and cosmetic.

5. Transfer metallization process comprising the following steps of

1) applying a transfer metallization primer according to any of claims 1 to 3 onto the surface of a polyethylene terephthalate (PET) film;
2) metallizing aluminum (Al) on top of the transfer metallization primer;
3) applying water-based adhesive on top of the metalized aluminium layer;
4) laminating the adhesive with a paper substrate; and
5) peeling off the polyethylene terephthalate film from another side on the press.

**Patentansprüche**

1. Verwendung einer Zusammensetzung als Transfermetallisierungsgrundierung, wobei die Zusammensetzung eine kolloidale Acrylemulsion umfasst, wobei die kolloidale Acrylemulsion eine Säurezahl von 60 bis 250 mg KOH/g, ein gewichtsmittleres Molekulargewicht (Mw) von 5500 bis 100.000 Dalton und eine Glasübergangstemperatur (Tg) von 20 bis 140 °C aufweist, wobei das gewichtsmittlere Molekulargewicht durch Gelpermeationschromatographie mit Poly(acrylsäure)-Na-Salz als Standards gemessen wird und die Glasübergangstemperatur gemäß der Fox-Gleichung berechnet wird.

2. Verwendung nach Anspruch 1, wobei die Säurezahl 150 bis 210 mg KOH/g beträgt, das gewichtsmittlere Molekulargewicht 6000 bis 60.000 Dalton beträgt und die Glasübergangstemperatur 60 bis 130 °C beträgt.

**3.** Verwendung nach Anspruch 1 oder 2, wobei die Transfermetallisierungsgrundierung ferner ein Additiv, das aus Tensiden, Koaleszenzmitteln, Entschäumern, Netzmitteln, Wachsen und Kombinationen davon ausgewählt ist, umfassen kann.

**4.** Verwendung der Transfermetallisierungsgrundierungen nach einem der Ansprüche 1 bis 3 für Papierverpackungsmaterialien für Zigaretten, Spirituosen, Lebensmittel und Kosmetika.

**5.** Transfermetallisierungsverfahren, das die folgenden Schritte umfasst:

1) Aufbringen einer Transfermetallisierungsgrundierung nach einem der Ansprüche 1 bis 3 auf die Oberfläche einer Polyethylenterephthalat(PET)-Folie;
2) Metallisieren von Aluminium (Al) auf der Transfermetallisierungsgrundierung;
3) Aufbringen von wasserbasiertem Klebstoff auf die Schicht von metallisiertem Aluminium;
4) Laminieren des Klebstoffs mit einem Papiersubstrat; und
5) Abziehen der Polyethylenterephthalatfolie von einer anderen Seite auf der Presse.

**Revendications**

**1.** Utilisation d'une composition en tant qu'apprêt de métallisation par transfert, la composition comprenant une émulsion acrylique colloïdale, l'émulsion acrylique colloïdale possédant un indice d'acide de 60 à 250 mg de KOH/g, un poids moléculaire moyen en poids (Mw) de 5 500 à 100 000 daltons, et une température de transition vitreuse (Tg) de 20 à 140°C, le poids moléculaire moyen en poids étant mesuré par chromatographie par perméation de gel avec du poly(acide acrylique) sodique en tant que norme et la température de transition vitreuse étant calculée selon l'équation de Fox.

**2.** Utilisation selon la revendication 1, l'indice d'acide étant de 150 à 210 mg de KOH/g, le poids moléculaire moyen en poids étant de 6 000 à 60 000 daltons, et la température de transition vitreuse étant de 60 à 130°C.

**3.** Utilisation selon la revendication 1 ou 2, l'apprêt de métallisation par transfert pouvant en outre comprendre un additif choisi parmi un tensioactif, un agent de coalescence, un antimousse, un agent de mouillage, une cire et une combinaison de ceux-ci.

**4.** Utilisation des apprêts de métallisation par transfert selon l'une quelconque des revendications 1 à 3 pour des matériaux d'emballage en papier de cigarette, d'alcool, de produit alimentaire et de produit cosmétique.

**5.** Procédé de métallisation par transfert comprenant les étapes suivantes de

1) application d'un apprêt de métallisation par transfert selon l'une quelconque des revendications 1 à 3 sur la surface d'un film en poly(téréphtalate d'éthylène) (PET) ;
2) métallisation d'aluminium (Al) au-dessus de l'apprêt de métallisation par transfert ;
3) application d'un adhésif à base d'eau au-dessus de la couche d'aluminium métallisé ;
4) stratification de l'adhésif avec un substrat en papier ; et
5) détachement du film en poly(téréphtalate d'éthylène) depuis un autre côté sur la presse.

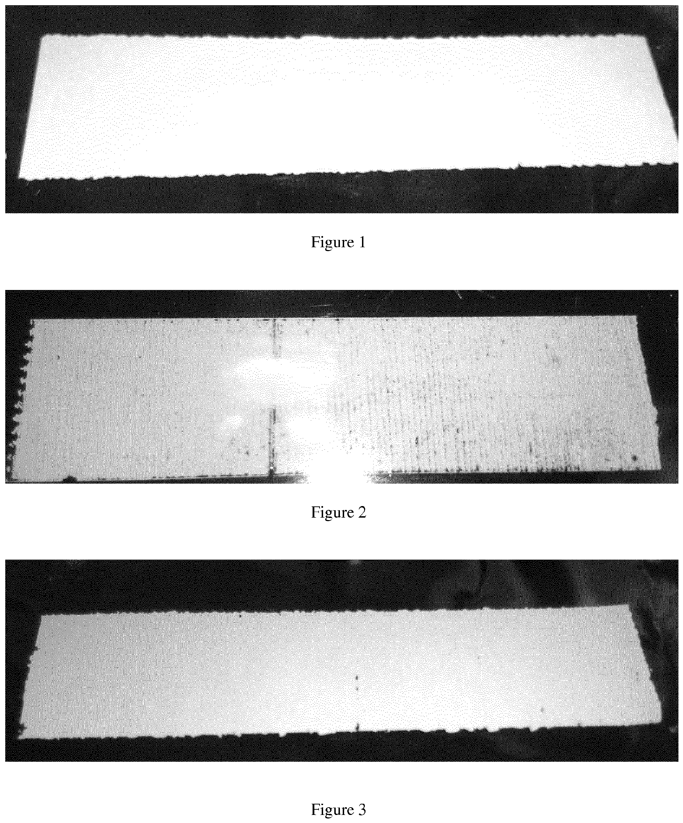

Figure 1

Figure 2

Figure 3

**EP 3 274 410 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20110317269 A1
- CN 103821032 A
- JP 2005343989 A

### Non-patent literature cited in the description

- Polymer Handbook. Interscience Publishers

**9**